# EUROPEAN PATENT SPECIFICATION

(11) **EP 3 565 107 B1**
(45) Date of publication and mention of the grant of the patent: **02.03.2022**
(21) Application number: 16925479.4
(22) Date of filing: 28.12.2016
(51) Int. Cl.: H02P 6/185, H02P 6/10, H02P 23/03

(54) **POWER CONVERSION DEVICE**
STROMWANDLUNGSVORRICHTUNG
DISPOSITIF DE CONVERSION DE PUISSANCE

(43) Date of publication of application: 06.11.2019
(73) Proprietor: Hitachi Industrial Equipment Systems Co., Ltd., Tokyo 101-0022 (JP)
(72) Inventor: OHYA, Masato, Tokyo 101-0022 (JP)
(74) Representative: MERH-IP Matias Erny Reichl Hoffmann Patentanwälte PartG mbB
(86) International application number: PCT/JP2016/089012
(87) International publication number: WO 2018/122991

(56) References cited:
- EP-A1- 3 043 465
- WO-A1-2015/182352
- JP-A- 2015 053 800
- US-A1- 2013 057 193
- US-B2- 9 024 561

## Description

### TECHNICAL FIELD

The present invention relates to a power conversion device.

### BACKGROUND ART

A power conversion device which drives an electric motor has been used in technical fields such as industrial machinery field, household electric appliance field, and automobile field. A synchronous motor including a permanent magnet has been widely adopted for the power conversion device used in these fields.

This type of synchronous motor is driven based on information about a magnetic pole position of the permanent magnet of the synchronous motor. Accordingly, a position sensor for detecting the magnetic pole position is needed.

However, for acquiring information about the magnetic pole position, a technology called sensor-less control has been more and more widespread. This control acquires the information based on estimation rather than by use of a position sensor to drive a synchronous motor. This sensor-less control includes a method which detects induced voltage (speed electromotive voltage) generated by rotation of the synchronous motor and estimates a magnetic pole position based on induced voltage information, and a method which estimates a magnetic pole position by calculation using a mathematical model of a target synchronous motor, for example.

Many types of sensor-less control currently put into practical use utilize induced voltage generated by rotation of a synchronous motor. In this case, a magnetic pole position is difficult to estimate around a zero speed, in a low speed range, and in a stop state where induced voltage is low or not generated. Accordingly, such a problem that desired driving characteristics are difficult to obtain may be produced.

For solving this problem, as disclosed in JP-A-2013-55744 (Patent Literature 1), a method which estimates a magnetic pole position by detecting induced voltage caused by magnetic saturation (hereinafter called "IVMS") based on 120-degree energization of a synchronous motor is used to control driving around a zero speed and in a low speed range. In EP 3 043 465 A1 an AC electric motor control device selects and conducts two phases of a three-phase AC electric motor, switches conducting phases on the basis of the comparison between the voltage value of the remaining non-conducting phase and a threshold value for said voltage value, and rotationally drives the three-phase AC electric motor. For setting of the threshold value, the AC electric motor control device is equipped with a threshold value detection mode for detecting said threshold value. In the threshold value detection mode, the rotor of the three-phase AC electric motor is once fixed by DC conduction, after which AC current is conducted between two phases to obtain said threshold value.

US 2013/057193 sequentially selects and drives two phases of the three-phase stator windings of a synchronous motor, detects a speed electromotive voltage of a de-energized phase, relates the speed electromotive voltage to rotor position information beforehand, then counts rotor position information backward based on the detected the speed electromotive voltage to estimate rotor position; and then detects rotation speed from the change rate of the rotor position information so as to achieve highly accurate position and speed control.

### SUMMARY OF INVENTION

### TECHNICAL PROBLEM

Patent Literature 1 describes estimation of a magnetic pole position by utilizing a relationship between an IVMS and a magnetic pole position to drive a synchronous motor.

However, the inventors have noticed that the IVMS is affected by a current flowing through a synchronous motor as well as by a magnetic pole position. More specifically, an IVMS is generated by a difference between change rates of magnetic fluxes generated in energized phases. In this case, the IVMS may be considerably affected not only by the magnetic pole position but also by intensity and direction of a current flowing through a synchronous motor depending on the type of the synchronous motor. Patent Literature 1 estimates a magnetic pole position without considering the effect of the current. In this case, the magnetic pole position of the synchronous motor considerably affected by the current is difficult to accurately estimate, wherefore desired driving characteristics are difficult to obtain.

Accordingly, an object of the present invention is to provide a power conversion device capable of obtaining desired driving characteristics around a zero speed and in a low speed range regardless of a level of effects imposed on an IVMS by a current.

### SOLUTION TO PROBLEM

The present invention is directed to a power conversion device according to independent claim 1. Dependent claims refer to preferred embodiments of the present invention.

### ADVANTAGEOUS EFFECTS OF INVENTION

Provided according to the present invention is a power conversion device capable of obtaining desired driving characteristics around a zero speed and in a low speed range regardless of a level of effects imposed on an IVMS by a current during driving of a synchronous motor.

Problems, configurations, and effects other than those described above will be clarified by following description of embodiments.

### BRIEF DESCRIPTION OF DRAWINGS

FIG. 1 shows an example of a configuration of a power conversion device according to a first embodiment.
FIG. 2 shows an example of a configuration of a motor control unit 116.
FIG. 3 shows an example of an IVMS in an energization mode 3.
FIG. 4 shows an example of an IVMS in an energization mode 6.
FIG. 5 shows an example of an applied voltage during driving.
FIG. 6 shows an example of characteristics of a detected current and a threshold.
FIG. 7 shows an example of an operation during forward driving without load.
FIG. 8 shows an example of a difference in effects imposed by a current of an IVMS.
FIG. 9 shows an example of an operation during forward driving with load.
FIG. 10 shows an example of an operation during reverse driving without load.
FIG. 11 shows an example of an operation when an energized phase current is inverted in FIG. 9.

### DESCRIPTION OF EMBODIMENTS

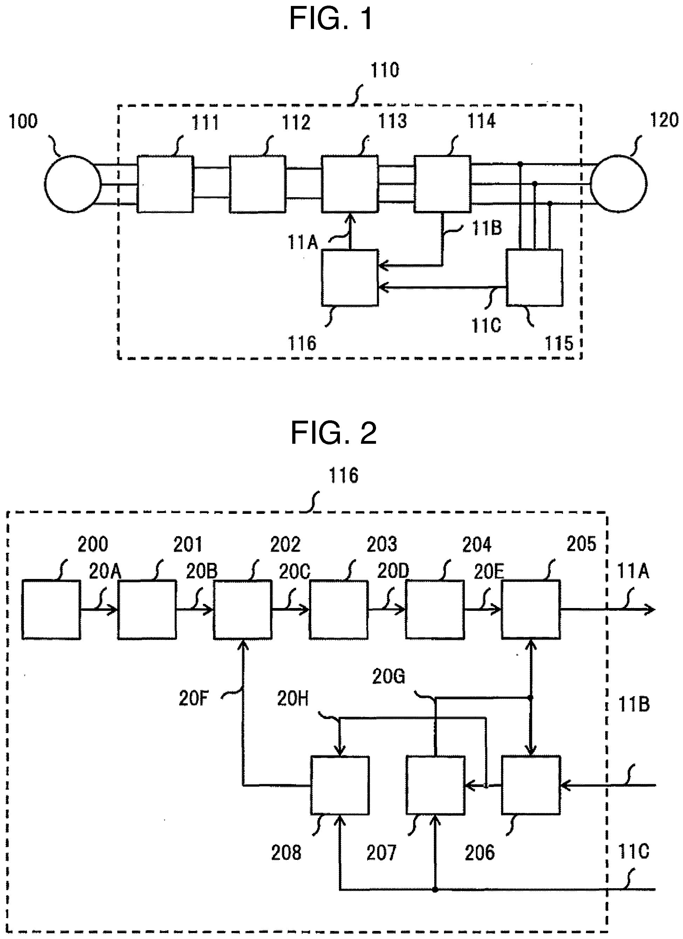

A configuration and an operation of a power conversion device according to an embodiment of the present invention will be hereinafter described with reference to FIGS. 1 to 11.

The following embodiment will be divided into a plurality of sections or embodiments as necessary for convenience of explanation. However, the respective sections and embodiments are not considered to be unrelated to each other unless otherwise specified. The respective sections and embodiments are related to each other such that one corresponds to a modification, details, supplementary explanation and the like of a part or the whole of the others.

In addition, when referring to the number of elements or others (e.g., including number of pieces, numerical value, amount, and range) in the following embodiments, the number referred to is not limited to a specific number, but may be more or less than the specific number unless otherwise specified, or unless clearly limited to the specific number in principle, for example.

Moreover, Needless to say, constituting elements (including element steps and the like) in the following embodiments are not necessarily essential unless otherwise specified, or unless considered to be obviously essential in principle, for example.

In all the figures explaining the embodiments, parts having identical functions are given identical reference numbers, and description of these parts will not be repeated.

### First Embodiment

Overall configurations of a control system for driving a synchronous motor, and a power conversion device including this control system according to the present embodiment will be described with reference to FIG. 1

A power conversion device 110 which drives a three-phase alternating current (AC) synchronous motor 120 includes a rectification circuit 111, a smoothing circuit 112, a switching circuit 113, a current detection circuit 114, a voltage detection circuit 115, and a motor control unit 116.

A three-phase AC voltage output from a three-phase AC power supply 100 is rectified by the rectification circuit 111, and smoothed by the smoothing circuit 112 to generate a direct current (DC) voltage. Note that a single-phase AC power supply may be adopted instead of the three-phase AC power supply 100 to rectify and smooth a single-phase AC voltage and generate a DC voltage. Alternatively, a DC voltage may be obtained directly from a DC power supply with the rectification circuit 111 and the smoothing circuit 112 removed.

The switching circuit 113 converts the DC voltage into any three-phase AC voltage corresponding to a gate drive command 11A by combining on-off of a plurality of switching elements, and applies the three-phase AC voltage to the three-phase AC synchronous motor 120. For example, the switching circuit may be constituted by parallel connection of U-phase, V-phase, and W-phase arms in each of which two switching elements are connected in series.

The current detector 114 detects a three-phase output current of the power conversion device 110. The current detector 114 may detect only two phases, and calculate the remaining one phase based on a fact that the sum of three-phase AC current becomes zero. Alternatively, the three-phase output current may be estimated from a current flowing in a shunt resistor provided on the positive electrode side or the negative electrode side of an input of the switching circuit 113.

The voltage detector 115 detects an IVMS using a three-phase AC voltage.

The motor control unit 116 estimates a magnetic pole position of the three-phase AC synchronous motor 120 using a detected current 11B and a detected IVMS 11C, and outputs a gate drive command 11A based on a speed command of the synchronous motor to obtain desired driving characteristics. Note that a position command or a torque command may be used instead of the speed command.

Description of the overall configurations of the control system which drives the synchronous motor, and the power conversion device including the control system according to the present embodiment is now completed.

A configuration of the motor control unit 116 will be described with reference to FIG. 2.

FIG. 2 is an example of an embodiment configuration of the motor control unit 116. The motor control unit 116 which outputs gate drive to the switching circuit 113 includes a speed command generator 200, a position command generator 201, a position deviation calculator 202, a position controller 203, a pulse width modulator 204, an output gate controller 205, a threshold generator 206, an energization mode determiner 207, and a position estimator 208.

The speed command generator 200 outputs a speed command 20A in accordance with desired driving characteristics, such as speed control, position control, and torque control.

The position command generator 201 performs arithmetic operation based on the speed command 20A to output a position command 20B.

The position deviation calculator 202 performs arithmetic operation of the position command 20B and an estimated position 20F to output a position deviation 20C.

The position controller 203 outputs a voltage command 20D based on which the position deviation 20C becomes zero. Note that the voltage command 20D based on which speed deviation becomes zero may be output. In this case, a following change is made. The position command generator 201 is not needed. Instead, a speed estimator which performs arithmetic operation of the estimated position 20F to output an estimated speed is added. A speed deviation calculator is provided instead of the position deviation calculator 202 to perform arithmetic operation of the speed command 20A and the estimated speed and generate speed deviation.

The pulse width modulator 204 performs arithmetic operation of the voltage command 20D to output a pulse width modulation command 20E.

The output gate controller 205 outputs the gate drive command 11A based on the pulse width modulation command 20E and an energization mode command 20G.

The threshold generator 206 outputs a threshold 20H based on the detected current 11B and the energization mode command 20G. An initial value of the threshold 20H is output based on the energization mode command 20G and an initial magnetic pole position (not shown). This initial magnetic pole position is determined by drawing the magnetic pole position to any magnetic pole position before actual driving, or by performing initial position estimation before actual driving.

The energization mode determiner 207 compares the detected IVMS 11C with the threshold 20H, and outputs the energization mode command 20G.

The position estimator 208 outputs the estimated position 20F based on the detected IVMS 11C and the threshold 20H. An initial magnetic pole position is designated as an initial value of the estimated position 20F.

Description of the configuration of the motor control unit 116 of the present embodiment is now completed.

A basic operation of the present embodiment will be hereinafter described.

The 120-degree energization method, which corresponds to the basis of the present embodiment, selects two phases from three phases of the three-phase AC synchronous motor 120 (U phase, V phase, and W phase are defined as three phases), and applies a voltage to the selected two phases (energized phases) to generate torque of a rotor. Six combinations of the energized phases are prepared. According to the present embodiment, these combinations are defined as energization modes 1 to 6. The energization mode switches between the six energization modes for every 60 degrees for driving in one rotor electrical angle cycle for each mode.

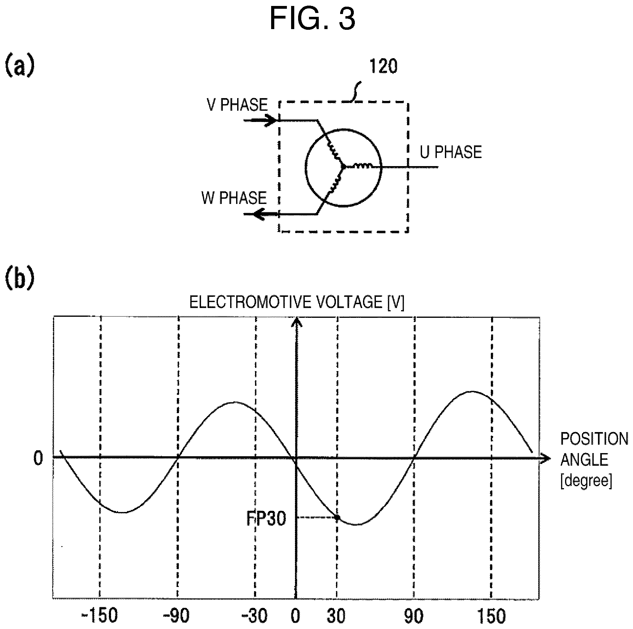

In a state shown in FIG. 3(a), the V phase and the W phase are selected as energized phases, the U phase is selected as a non-energized phase, and a voltage is applied to the three-phase AC synchronous motor 120 to cause a current to flow from the V phase to the W phase. This voltage application corresponds to the energization mode 3.

FIG. 3(b) shows an example of an electromotive voltage observed in the U phase when a position angle of the rotor is changed by one electrical angle cycle under application of a voltage in the energization mode 3. It is known that the electromotive voltage in the U phase varies in accordance with the position angle of the rotor. FIG. 3(b) shows FP30 which is a value of an electromotive voltage when the position angle of the rotor corresponds to 30 degrees. The FP30 will be further described below. In the description of the present embodiment, the position angle of the rotor is 0° at the position of the U phase winding, and a counterclockwise direction is designated as a positive direction concerning the positive or negative sign of the position angle.

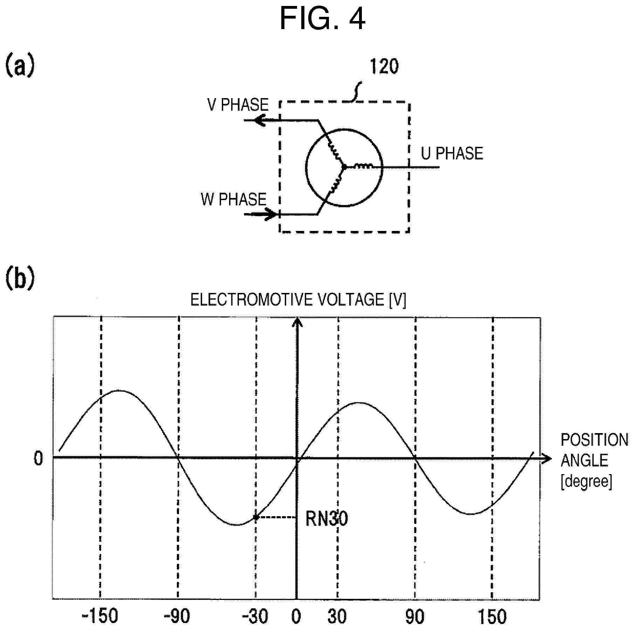

In another state shown in FIG. 4(a), the V phase and the W phase are selected as energized phases, the U phase is selected as a non-energized phase, and a voltage is applied to the three-phase AC synchronous motor 120 to cause a current flow from the W phase to the V phase. This voltage application corresponds to the energization mode 6.

FIG. 4(b) shows an example of an electromotive voltage observed in the U phase when a position angle of the rotor is changed by one electrical angle cycle under application of a voltage in the energization mode 6. It is known that the electromotive voltage in the U phase varies in accordance with the position angle of the rotor. FIG. 4(b) shows RN30 which is a value of an electromotive voltage when the position angle of the rotor corresponds to -30 degrees. The RN30 will be further described below.

Each of the electromotive voltages described above is a difference between change rates of magnetic fluxes generated in the V phase and the phase of the W phase corresponding to the energized phases, the difference observed as a voltage in the U phase corresponding to the non-energized phase, and is known as an IVMS. Driving is implemented by estimating the position of the rotor while utilizing a relationship between the position angle of the rotor and the IVMS. Accordingly, a relationship between the rotor position angle of the three-phase AC synchronous motor 120 and the IVMS is detected beforehand prior to actual driving, and characteristics of the relationship are recorded in a recording section (not shown). In addition, unlike an induced voltage used in sensor-less control in middle and high speed ranges, an IVMS can be also observed at a zero speed or low speed. Accordingly, sensor-less control utilizing an IVMS is performed at least in the range of zero speed or low speed.

While the three-phase AC synchronous motor 120 in each of FIGS. 3(a) and 4(a) shows a case of star connection, the present invention is applicable to delta connection where an IVMS is observable.

A procedure for detecting an IVMS during driving will be next described.

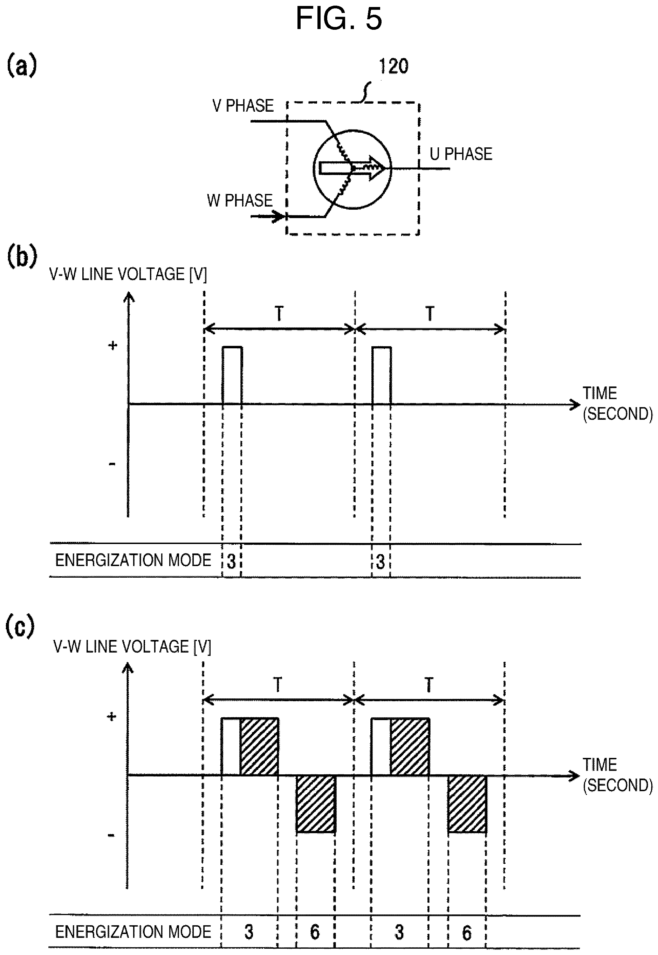

Described herein by way of example is an applied voltage during driving when the position angle of the rotor shown in FIG. 5(a) corresponds to 0 degrees. A white arrow in FIG. 5(a) indicates a direction of magnetic flux of the rotor. When a voltage is applied in the energization mode 3 in this condition, torque is generated to perform forward driving (rotor position angle increasing direction). When a voltage is applied in the energization mode 6, torque is generated to perform reverse driving (rotor position angle decreasing direction).

When forward driving is attempted, a voltage is applied in a manner shown in FIG. 5(b). In FIG. 5(b), a horizontal axis represents time, a vertical axis represents a line voltage between the V phase and the W phase, and T represents a pulse width modulation cycle. The voltage command 20D determines a voltage application time within the cycle T in the energization mode 3. When an IVMS is detected during voltage application in the energization mode 3, FIG. 3(b) is observed according to the position angle of the rotor. The IVMS during driving can be detected by a method which applies a voltage in the manner shown in FIG. 5 (b). However, when a voltage is applied in this manner, driving is limited to the energization mode 3, i.e., forward driving. Accordingly, for handling general-purpose driving commands such as forward rotation, reverse rotation, and zero speed, a voltage is applied as shown in FIG. 5(c).

FIG. 5(c) shows voltage application when forward driving is attempted similarly to FIG. 5(b). The difference from FIG. 5(b) is that line voltages in hatched portions are added to the applied voltage in FIG. 5(b) for generating torque. An average of the line voltages in the hatched portions becomes a zero voltage. In this case, an output voltage of one pulse width modulation cycle becomes a value equal to the value in FIG. 5 (b). Accordingly, similar torque is generated to achieve forward driving. When reverse driving is attempted, an energization time of the pulse width modulation one cycle in the energization mode 6 is made longer than the energization time in the energization mode 3 in FIG. 5(c) to achieve reverse driving.

A voltage can be applied in the energization mode 3 and the energization mode 6 during forward driving by adding line voltages in the hatched portions. This method is therefore applicable to switching from the forward command to the reverse command, switching from the reverse command to the forward command, or the zero speed command. The time for adding the applied voltage in the hatched portions may be any period of time as long as a time necessary for detecting the detected IVMS 11C is secured. According to the present embodiment, the pulse width modulation converter 204 performs an arithmetic operation which applies a voltage in the manner shown in FIG. 5(c) based on the voltage command 20D to output the pulse width modulation command 20E.

Description of detection of two types of IVMS corresponding to two types of energization mode in the pulse width modulation one cycle is now completed.

A procedure for switching the energization mode during driving will be next described. As described above, the energization mode switches for every 60 degrees in the 120-degree energization method. This switching is performed by the energization mode determiner 207.

In case of the forward driving in the energization mode 3, the position angle at which appropriate torque is generated in the rotor lies in a 60-degree section ranging from -30 degrees to 30 degrees. When the position angle of the rotor reaches approximately 30 degrees by the forward driving, the energization mode 3 which applies a voltage to cause a current to flow from the V phase to the W phase is switched to the energization mode 4 which applies a voltage to cause a current to flow from the V phase to the U phase to achieve driving in a next 60-degree section ranging from 30 degrees to 90 degrees.

The procedure for switching a forward determination is performed based on a result of comparison between the threshold 20H and the detected IVMS 11C. A threshold for switching of the forward determination at 30 degrees corresponds to an electromotive voltage at 30 degrees in FIG. 3(b), i.e., the threshold FP30. The forward determination is switched when the detected IVMS in the energization mode 3 reaches the threshold FP30 during driving in the 60-degree section ranging from -30 degrees to 30 degrees.

In this manner, thresholds FN150, FN90, FN30, FP30, FP90, and FP150 corresponding to -150 degrees, -90 degrees, -30 degrees, 30 degrees, 90 degrees, and 150 degrees, respectively, which are the position angles of the rotor where switching of the forward determination is performed, are established. The respective thresholds are compared with the detected IVMS 11C. The energization mode is switched in accordance with a result of the comparison.

In case of reverse driving, similarly to the above case, thresholds RN150, RN90, RN30, RP30, RP90, and RP150 corresponding to -150 degrees, -90 degrees, -30 degrees, 30 degrees, 90 degrees, and 150 degrees, respectively, which are the position angles of the rotor where switching of a reverse determination is performed, are established. The respective thresholds are compared with the detected IVMS 11C. Switching of the energization mode of the reverse determination is achieved in accordance with a result of the comparison.

Description of the switching procedure of the energization mode during driving is now completed.

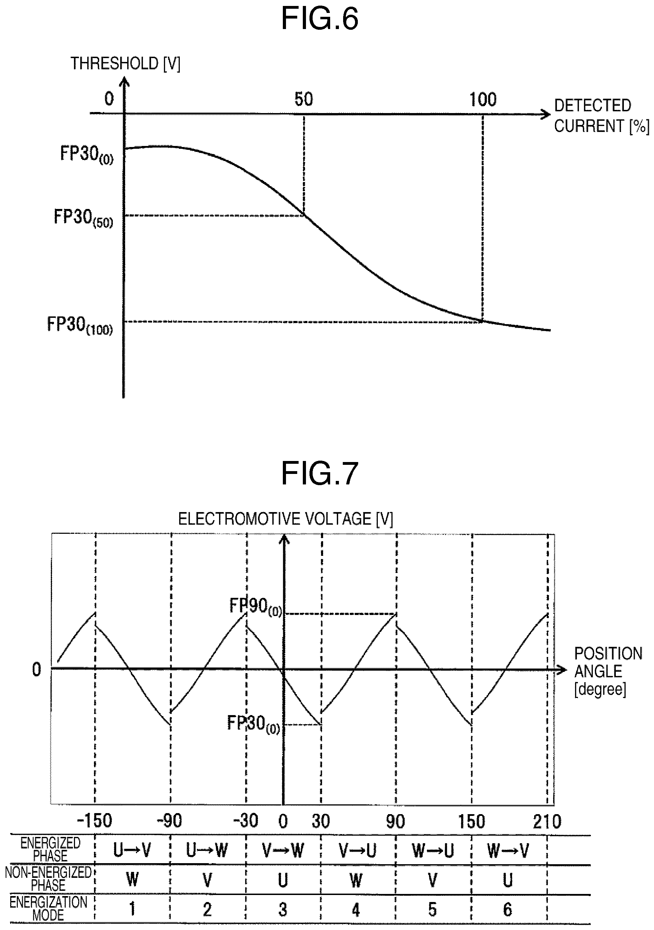

Described next will be an operation of the threshold generator 206 for outputting the threshold 20H used for switching of the energization mode. To start driving from the state of FIG. 5(a), the energization mode command 20G indicating the energization mode 3 is output as an initial value of the energization mode determiner 207. The threshold generator 206 reads the characteristics of the threshold FP30 and the detected current 11B recorded in the recording section from the energization mode 3, which is the energization mode command 20G, and the initial magnetic pole position. FIG. 6 shows an example of these characteristics. In FIG. 6, a horizontal axis represents a detected current (assuming that rated current of three-phase AC synchronous motor 120 desired to drive corresponds to 100%), while a vertical axis represents a threshold. These characteristics are read, and the threshold FP30 is determined according to the detected current 11B and output. For example, when the detected current 11B is 50% in the energization mode 3 as the energization mode during driving, the FP30(so) is output as the threshold FP30.

Characteristics of the thresholds FN150 or FP150, RN150 or RP150, and the detected current 11B are read in accordance with the respective energization modes. The threshold 20H to be output is determined according to the value of the detected current 11B.

Description of the operation of the threshold generator 206 which outputs the threshold 20H used for switching of the energization mode is now completed.

In addition to the above description, a driving procedure according to the present embodiment will be hereinafter described. For the sake of simplicity, only the energization mode for generating torque corresponding to forward driving or reverse driving will be described.

FIG. 7 shows a relationship between an IVMS, a position angle, an energized phase and a current flow direction, a non-energized phase, and an energization mode during forward driving without load. An operation during driving will be described with reference to FIG. 7. When the current energization mode is the energization mode 3 at the detected IVMS of 0V, for example, the position estimator 208 estimates that the rotor position angle is located on the negative side near 0 degrees. When the position angle of the rotor lies in the section ranging from -30 degrees to 30 degrees, the IVMS decreases with the forward rotation of the rotor as shown in FIG. 3(b). When the detected IVMS reaches a threshold (FP30(o)) of the electromotive voltage established at the position angle of 30 degrees, the energization mode advances from the energization mode 3 to the energization mode 4. As described with reference to FIG. 5(c), the IVMS in the energization mode 6 is also detected in the section of the rotor position angle from -30 degrees to 30 degrees. In case of the energization mode 6, the energization mode is updated from the energization mode 6 to the energization mode 5 when the detected IVMS reaches the threshold RN30.

In the section of the rotor position angle from 30 degrees to 90 degrees after switching of the energization mode, the non-energized phase switches to the W phase. The IVMS generated in the W phase is detected to estimate the magnetic pole position. In this section, the IVMS increases with the forward rotation of the rotor. Similarly to the update from the energization mode 3 to the energization mode 4, in the energization mode 4, the energization mode advances from the energization mode 4 to the energization mode 5 when the detected IVMS reaches a threshold (FP90(o)) of the electromotive voltage established at the position angle of 90 degrees.

By repeating this operation, a voltage can be applied to the magnetic pole position in such a manner as to constantly generate appropriate torque.

Driving when a load is generated during forward rotation will be next described.

When a load is generated, a flowing current increases to raise torque generated in the rotor of the synchronous motor. The IVMS which constitutes the basis of this method is produced by a difference between change rates of magnetic fluxes in the energized phases. It is therefore necessary to consider not only the magnetic pole position but also an effect of intensity of the current.

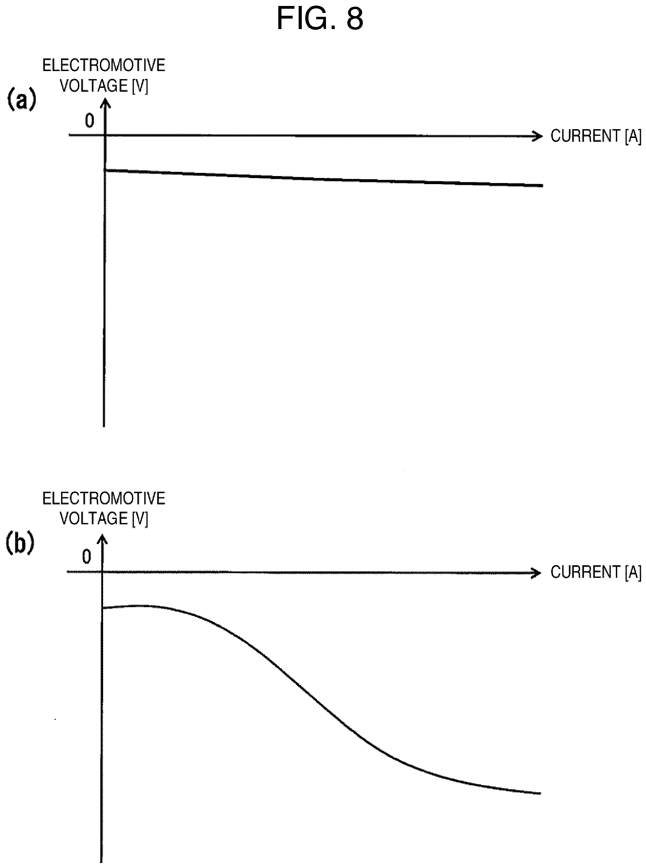

This effect of intensity of the current varies depending on characteristics of the synchronous motor. An example of the effect will be described with reference to FIGS. 8(a) and 8(b). In a graph in FIG. 8, a horizontal axis represents a current flowing when the position angle of the rotor of the synchronous motor corresponds to 30 degrees with application of a voltage in the energization mode 3, while a vertical axis represents an electromotive voltage generated in this condition. FIG. 8(a) shows characteristics of a certain synchronous motor, while FIG. 8(b) shows characteristics of another electric motor. The position angle is fixed at 30 degrees in both cases, wherefore the electromotive voltage varies in accordance with increase and decrease of magnetic flux produced by intensity of the current. The current produced by the synchronous motor having the characteristics as shown in FIG. 8(a) imposes a small effect on the electromotive voltage. Accordingly, a large problem is not caused in detection accuracy even when the magnetic pole position is detected using the relationship shown in FIG. 7. However, the current produced by the synchronous motor having the characteristics as shown in FIG. 8(b) imposes a large effect on the electromotive voltage. Accordingly, estimation accuracy of the position angle of the rotor decreases with current increase when the magnetic pole position is detected using the relationship shown in FIG. 7. As a result, phenomena such as pulsation of torque generated in the rotor, and step-out may be caused. Following description is associated with the synchronous motor which imposes a large effect of a current on an electromotive voltage as shown in FIG. 8 (b).

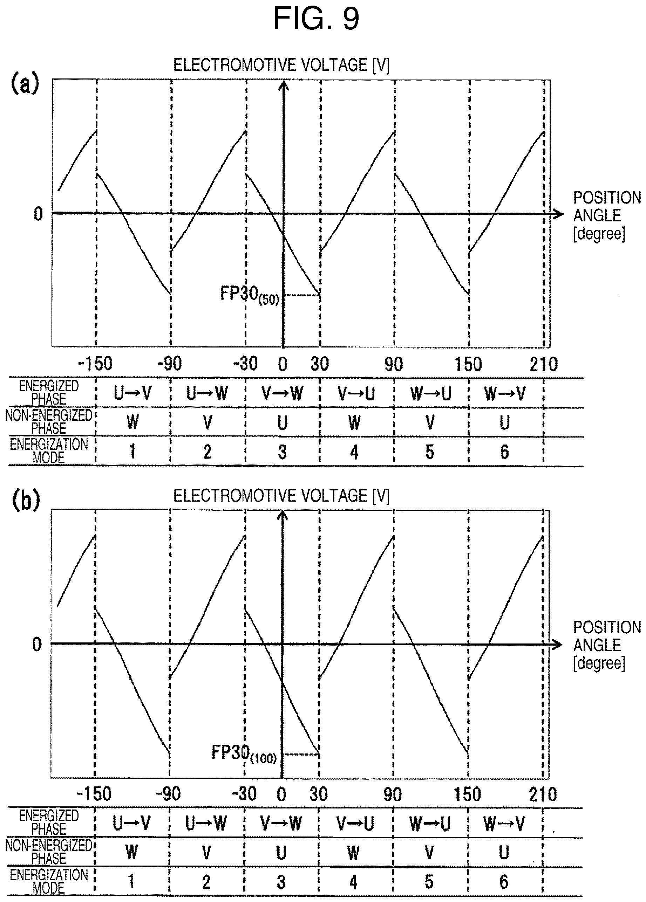

FIG. 9(a) shows a relationship between a rotor position angle and an IVMS during forward rotation with a load and a current flow of about 50%. FIG. 9(b) shows a relationship between a rotor position angle and an IVMS with a larger load and a current flow of about 100%. Each of these cases shows an example of IVMS variable according to intensity of the current. A change of fluctuation characteristics of the IVMS is recognizable from the corresponding characteristics in FIG. 4.

The position estimator 208 herein determines the relationship between the rotor position angle and the IVMS, which is used for magnetic pole position estimation, based on the threshold 20H input from the threshold generator 206. For example, when the current energization mode is the energization mode 3 with a current flow of about 50%, the threshold (FP30₍₅₀₎) is input from the threshold generator. Accordingly, the relationship shown in FIG. 9 (a) is used. When the detected IVMS is 0V, it is estimated that the position angle of the rotor is located around -10 degrees. Similarly, when the current energization mode is the energization mode 3 with a current flow of about 100%, the threshold (FP30(ioo)) is input from the threshold generator. Accordingly, the relationship shown in FIG. 9(b) is used. When the detected IVMS is 0V, it is estimated that the position angle of the rotor is located around -15 degrees.

The threshold generator 206 also changes the threshold of the IVMS for update from the energization mode 3 to the energization mode 4 in accordance with intensity of the detected current. For example, in case of the threshold of the IVMS, which is a threshold equivalent to a value in the state without load as shown in FIG. 4, in the state of FIG. 9(b), the energization mode advances from the energization mode 3 to the energization mode 4 in a stage before the position angle of 30 degrees corresponding to the position for update, i.e., around a point after passage from 0 degrees. In this case, appropriate torque is not generated. According to the present embodiment, therefore, FP30(ioo) is used instead of the FP30(o) which is the threshold without load.

By these operations, magnetic pole position information associated with the synchronous motor can be estimated and acquired from the relationship between the detected IVMS and the detected current without using a position sensor.

Accordingly, the power conversion device provided herein is capable of achieving desired driving characteristics of the synchronous motor by sensor-less control around a zero speed and in a low speed range regardless of the level of the effect of the current imposed on the IVMS.

Moreover, concerning the operation of reverse driving (rotor position angle decreasing direction), torque for reversing the rotor can be generated by switching the voltage applied to the energized phase from the corresponding voltage in the energization mode during the forward rotation.

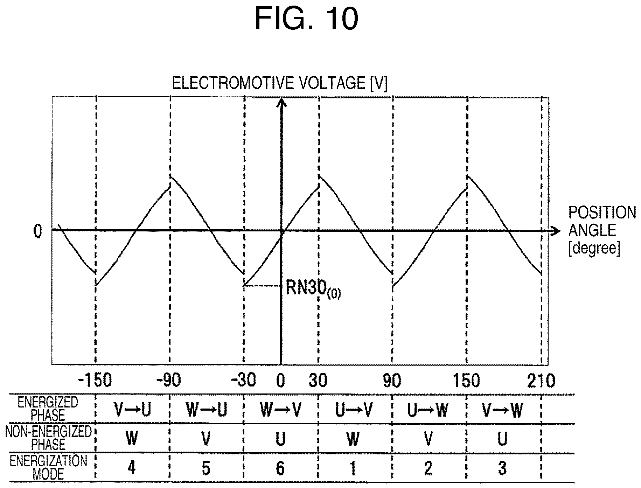

FIG. 10 shows a relationship between an IVMS, a position angle, an energized phase and a current flow direction, a non-energized phase, and an energization mode during reverse driving without load. The basic operation principle is equivalent to the basic operation principle in the forward rotation. The difference lies in settings of the energization mode and the threshold of the IVMS with respect to the rotor position angle. For example, in the section of the rotor position angle from -30 degrees to 30 degrees during forward rotation, driving is performed in the energization mode 3. However, during the reverse rotation, driving is performed in the energization mode 6. In this case, the energization mode advances from the energization mode 6 to the energization mode 5 when the detected IVMS reaches the threshold (RN30(o)) of the electromotive voltage established at the position angle of -30 degrees.

Furthermore, similarly to the case during the forward rotation, the fluctuation characteristics of the IVMS in accordance with the current are used when the current flowing in the synchronous motor increases by generation of a load. Magnetic pole position information associated with the synchronous motor can be estimated and acquired from the relationship between the detected IVMS and the detected current.

According to the present embodiment, the relationship between the magnetic pole position of the synchronous motor and the detected IVMS, and the relationship between the detected current and the threshold are expressed by the data table shown in FIG. 9 and other figures. However, the magnetic pole position can be estimated by calculation of approximation using a function.

### Second Embodiment

Described in the first embodiment, which does not belong to the scope of protection, is a driving method used when a load is generated, requiring larger torque for the rotor of the synchronous motor and increasing the current. However, the IVMS may be affected not only by the intensity of the current but also by the direction of the current depending on the characteristics of the synchronous motor. According to this type of synchronous motor, the magnetic pole position is difficult to accurately detect by considering only intensity of the current as in the first embodiment when the direction of the current flowing in the energized phase is inverted by generation of a load, i.e., when a power running state is switched to a regenerative state, for example. According to a feature of the present embodiment of the invention, therefore, the magnetic pole position is detected in consideration of not only the intensity of the current but also the direction of the current, and the three-phase AC synchronous motor is controlled by using the detected magnetic pole position.

Configurations of a power conversion device and a motor control unit according to the present embodiment are identical to those described in the first embodiment shown in FIGS. 1 and 2. The Present embodiment is different from the first embodiment in the estimation principle of the magnetic pole position. As described above, the IVMS is produced by a difference between change rates of magnetic fluxes in the energized phases. It is therefore necessary to consider not only the magnetic pole position but also the effects by intensity of the current and further the direction of the current. Accordingly, in addition to the first embodiment, not only the intensity of the detected current but also the direction of the detected current is considered concerning the detected IVMS and the detected current associated with the magnetic pole position information about the synchronous motor. For example, fluctuation characteristics at the time of new inversion of the current, i.e., switching of the energized phases are used in addition to the fluctuation characteristics of the magnetic saturation voltage in FIGS. 8(a) and 8(b) to cope with a wider variety of load fluctuations.

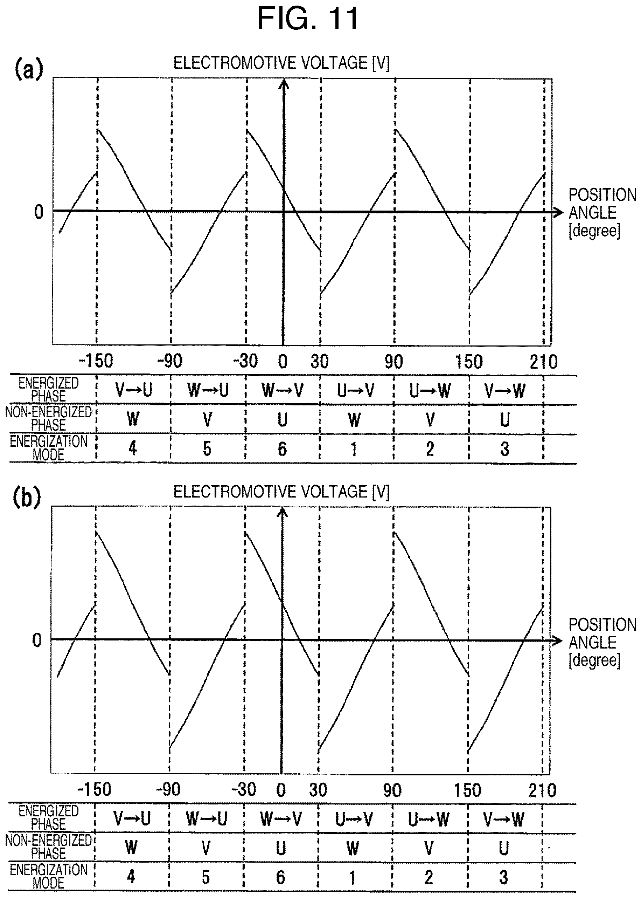

FIGS. 11(a) and 11(b) each show a relationship between an IVMS, a position angle, an energized phase and a current flowing direction, a non-energized phase, and an energization mode when the current direction is inversed from the direction shown in FIGS. 9(a) and 9(b). Only the current direction is different. The driving direction of the rotor of the synchronous motor is the forward direction. Intensities of the flowing current are the same intensities of 50% and 100%. This relationship is also detected beforehand prior to actual driving, and characteristics of the relationship are recorded in the recording section.

When the current energization mode is the energization mode 6 at the detected IVMS of 0V, the position estimator 208 estimates that the rotor position angle is located near 10 degrees. When the detected IVMS reaches a threshold of the electromotive voltage established at the position angle of 30 degrees, the energization mode advances from the energization mode 6 to the energization mode 1. FIGS. 9(a) and 9(b) each show driving in the energization mode 6 in the section after switching of the energized phase from the energization mode 3. Accordingly, a different correspondence relationship between the IVMS and the position angle, and a different threshold for changing the energization mode need to be established in correspondence with the reversal of the current.

When the fluctuation characteristics of the IVMS change by the direction change of the current flowing through the synchronous motor, a data table divided into two parts based on the direction of the current is prepared beforehand concerning the relationship between the magnetic pole position of the synchronous motor and the detected IVMS used for estimation of the magnetic pole position. Alternatively, currents may be divided into positive currents and negative currents, and a data table combining two divided parts of positive current and negative current may be used.

Even when the current is inversed during driving in the reverse driving, similar achievement can be offered by establishing a correspondence relationship between the IVMS and the position angle, and a threshold for changing the energization mode in correspondence with the inverted current.

Accordingly, the power conversion device provided herein is capable of achieving desired driving characteristics of a wider variety of three-phase AC synchronous motors than in the first embodiment by sensor-less control around a zero speed and in a low speed range regardless of the level of the effect of the current imposed on the IVMS.

Apart or the whole of each of configurations, functions, processing sections, processing means and the like described above may be implemented by hardware, such as an integrated circuit designed for these configurations and the like, for example. In addition, each of the configurations, functions and the like described above may be implemented by software under a program interpreted and executed by a processor for implementing each of the functions. Information such as a program, a table, a file or the like which implements each of the functions can be stored in a storage device such as a memory, a hard disk, a solid state drive (SSD), or a recording medium such as an integrated circuit (IC) card, a secure digital memory (SD) card, and a digital video disk (DVD).

Control lines and information lines indicate only those considered to be necessary for explanation, and not necessarily indicate all control lines and information lines formed on a product. In practice, it may be considered that almost all configurations are mutually connected.

### REFERENCE SIGNS LIST

- 100: Three-phase AC power supply
- 110: Power conversion device
- 111: Rectification circuit
- 112: Smoothing circuit
- 113: Switching circuit
- 114: Current detection circuit
- 115: Voltage detection circuit
- 116: Motor control unit
- 11A: Gate drive command
- 11B: Detected current
- 11C: Detected IVMS
- 120: Three-phase AC synchronous motor
- 200: Speed command generator
- 201: Position command generator
- 202: Position deviation calculator
- 203: Position controller
- 204: Pulse width modulation converter
- 205: Output gate controller
- 206: Threshold generator
- 207: Energization mode determiner
- 208: Position estimator
- 20A: Speed command
- 20B: Position command
- 20C: Position deviation
- 20D: Voltage command
- 20E: Pulse width modulation command
- 20F: Estimated position
- 20G: Energization mode command
- 20H: Threshold

## Claims

1. A power conversion device (110) for converting an alternating current, AC, voltage or a direct current, DC, voltage into an AC voltage to control a three-phase AC synchronous motor (120), the power conversion device (110) comprises:
a control unit (116) configured to select two phases to be energized from three phase windings of the three-phase AC synchronous motor (120), and control the three-phase AC synchronous motor (120) in six energization modes, **characterized in that**
the control unit (116) is configured to
estimate a magnetic pole position of the three-phase AC synchronous motor (120) based on a detected voltage of a non-energized phase of the three-phase windings, a detected current (11B) of an energized phase of the three-phase windings and an energization mode, and
control the three-phase AC synchronous motor (120) by using the estimated magnetic pole position,
wherein
the control unit (116) is configured to estimate the magnetic pole position based on the intensity and direction of the detected current (11B) of the energized phase.

2. The power conversion device (110) according to claim 1, **characterized in that** the control unit (116) is configured to include an energization mode determination section that compares the detected voltage of the non-energized phase with a threshold (20H) to determine whether to switch from a first energization mode to a second energization mode in the six energization modes.

3. The power conversion device (110) according to claim 2, **characterized in that** the threshold (20H) is determined based on intensity of the detected current (11B) of the energized phase.

4. The power conversion device (110) according to claim 2, **characterized in that** the threshold (20H) is determined based on intensity and direction of the detected current (11B) of the energized phase.

5. The power conversion device (110) according to any one of claims 1 to 4, **characterized in that** the control unit (116) configured to calculate a rotation speed of the three-phase AC synchronous motor (120) based on the estimated magnetic pole position.

## Patentansprüche

1. Leistungsumsetzungsvorrichtung (110) zum Umsetzen einer Wechselspannung, AC-Spannung, oder einer Gleichspannung, DC-Spannung, in eine AC-Spannung, um einen Dreiphasenwechselstrom-Synchronmotor (120) zu steuern, wobei die Leistungsumsetzungsvorrichtung (110) Folgendes umfasst:
eine Steuereinheit (116), die konfiguriert ist, zwei zu erregende Phasen der Dreiphasenwicklungen des Dreiphasenwechselstrom-Synchronmotors (120) auszuwählen und den Dreiphasenwechselstrom-Synchronmotor (120) in sechs Erregungsbetriebsarten zu steuern, **dadurch gekennzeichnet, dass**
die Steuereinheit (116) konfiguriert ist zum
Schätzen einer Magnetpolposition des Dreiphasenwechselstrom-Synchronmotors (120) auf der Grundlage einer detektierten Spannung einer nicht erregten Phase der Dreiphasenwicklungen, eines detektierten Stroms (11B) einer erregten Phase der Dreiphasenwicklungen und einer Erregungsbetriebsart, und
Steuern des Dreiphasenwechselstrom-Synchronmotors (120) unter Verwendung der geschätzten Magnetpolposition,
wobei die Steuereinheit (116) konfiguriert ist, die Magnetpolposition auf der Grundlage der Stärke und der Richtung des detektierten Stroms (11B) der erregten Phase zu schätzen.

2. Leistungsumsetzungsvorrichtung (110) nach Anspruch 1, **dadurch gekennzeichnet, dass** die Steuereinheit (116) konfiguriert ist, einen Erregungsbetriebsart-Bestimmungsabschnitt zu enthalten, der die detektierte Spannung der nicht erregten Phase mit einem Schwellenwert (20H) vergleicht, um zu bestimmen, ob von einer ersten Erregungsbetriebsart auf eine zweite Erregungsbetriebsart der sechs Erregungsbetriebsarten geschaltet werden soll.

3. Leistungsumsetzungsvorrichtung (110) nach Anspruch 2, **dadurch gekennzeichnet, dass** der Schwellenwert (20H) auf der Grundlage der Intensität des detektierten Stroms (11B) der erregten Phase bestimmt wird.

4. Leistungsumsetzungsvorrichtung (110) nach Anspruch 2, **dadurch gekennzeichnet, dass** der Schwellenwert (20H) auf der Grundlage der Intensität und der Richtung des detektierten Stroms (11B) der erregten Phase bestimmt wird.

5. Leistungsumsetzungsvorrichtung (110) nach einem der Ansprüche 1 bis 4, **dadurch gekennzeichnet, dass** die Steuereinheit (116) konfiguriert ist, eine Drehzahl des Dreiphasenwechselstrom-Synchronmotors (120) auf der Grundlage der geschätzten Magnetpolposition zu berechnen.

## Revendications

1. Dispositif de conversion de puissance (110) destiné à convertir une tension en courant alternatif, CA, ou une tension en courant continu, CC, en une tension CA pour commander un moteur synchrone CA triphasé (120), le dispositif de conversion de puissance (110) comprenant :
une unité de commande (116) configurée pour sélectionner deux phases qu'il s'agit d'exciter à partir de trois bobinages de phase du moteur synchrone CA triphasé (120), et pour commander le moteur synchrone CA triphasé (120) en six modes d'excitation,
**caractérisé en ce que**
l'unité de commande (116) est configurée pour
estimer une position de pôle magnétique du moteur synchrone CA triphasé (120) sur la base d'une tension détectée d'une phase non excitée des trois bobinages triphasés, d'un courant détecté (11B) d'une phase excitée des trois bobinages triphasés et d'un mode d'excitation, et
commander le moteur synchrone CA triphasé (120) en utilisant la position de pôle magnétique estimée,
dans lequel
l'unité de commande (116) est configurée pour estimer la position de pôle magnétique sur la base de l'intensité et de la direction du courant détecté (11B) de la phase excitée.

2. Dispositif de conversion de puissance (110) selon la revendication 1, **caractérisé en ce que** l'unité de commande (116) est configuré pour inclure une section de détermination de mode d'excitation qui compare la tension détectée de la phase non excitée à un seuil (20H) pour déterminer s'il faut commuter depuis un premier mode d'excitation vers un deuxième mode d'excitation dans les six modes d'excitation.

3. Dispositif de conversion de puissance (110) selon la revendication 2, **caractérisé en ce que** le seuil (20H) est déterminé sur la base de l'intensité du courant détecté (11B) de la phase excitée.

4. Dispositif de conversion de puissance (110) selon la revendication 2, **caractérisé en ce que** le seuil (20H) est déterminé sur la base de l'intensité et de la direction du courant détecté (11B) de la phase excitée.

5. Dispositif de conversion de puissance (110) selon l'une quelconque des revendications 1 à 4,
**caractérisé en ce que** l'unité de commande (116) est configurée pour calculer une vitesse de rotation du moteur synchrone CA triphasé (120) sur la base de la position de pôle magnétique estimée.
